# DEMANDE DE BREVET EUROPEEN

(11) **EP 1 513 237 A1**
(43) Date de publication de la demande: **09.03.2005**
(21) Numéro de dépôt: 04292049.6
(22) Date de dépôt: 13.08.2004
(51) Int. Cl.: H02G 1/02, B66F 11/04

(54) **Dispositif d'isolation électrique pour un appareil de manutention**

(30) Priorité: 20.08.2003 FR 0310051
(71) Demandeur: Electricité de France, 75008 Paris (FR)
(72) Inventeur: Dubail, Rémi, 68700 Cernay (FR); Vassards, Vincent, 68310 Wittelsheim (FR); Mougenet, Jean-François, 68260 Kingersheim (FR); Riquel, Guy, 77690 Montigny sur Loing (FR)
(74) Mandataire: Burbaud, Eric

(57) **Abrégé**

L'invention concerne un dispositif d'isolation électrique (15) pour un engin de manutention (1) muni d'un bras (7), ce dispositif (15) comportant un insert (16) électriquement isolant destiné à former une portion dudit bras (7), cet insert (16) comportant un noyau rigide tubulaire réalisé dans un matériau électriquement isolant, recouvert d'une enveloppe (20) en élastomère nervurée radialement sur la majeure partie de sa longueur.

Elle concerne également un engin élévateur comportant un tel dispositif d'isolation électrique (15).

## Description

L'invention concerne un dispositif d'isolation électrique pour un appareil de manutention, ainsi qu'un engin élévateur équipé d'un tel dispositif.

La maintenance des lignes électriques à haute tension exige, pour certaines opérations, l'intervention d'un opérateur qui, placé dans la nacelle d'un engin élévateur, manipule le câble conducteur concerné alors même que celui-ci est sous tension.

Cette manipulation peut s'effectuer soit à distance au moyen d'une perche isolante lorsque la nature de l'intervention le permet, soit directement lorsque la nature de l'intervention l'exige, l'opérateur travaillant avec ou sans gants électriquement isolants.

En l'absence d'isolation, il existe un risque que l'opérateur subisse un choc électrique résultant de la différence de potentiel entre le câble conducteur avec lequel l'opérateur est éventuellement en contact, et le sol sur lequel repose l'engin élévateur.

C'est pourquoi il est indispensable d'isoler électriquement au moins la nacelle du reste de l'engin.

Il est également indispensable de protéger l'opérateur contre les courants de fuite qui, en provenance de la ligne électrique, tendent à se propager le long de l'engin en direction du sol.

Rappelons que les engins élévateurs sont généralement équipés d'un mécanisme élévateur déployable comportant plusieurs bras mobiles, dont la cinématique peut être du type à compas (les bras étant pivotants), ou télescopique (les bras étant coulissants).

Il est connu d'équiper le bras sommital, à l'extrémité duquel se trouve d'ordinaire la nacelle, d'un insert électriquement isolant formant une portion de ce bras. Un tel insert se présente par exemple sous la forme d'une portion tubulaire intercalée entre deux portions conductrices du bras.

S'il permet d'éviter les chocs électriques, un tel insert a souvent du mal à entraver la propagation des courants de fuite, surtout par temps humide où l'engin est recouvert d'un film aqueux électriquement conducteur, favorable à cette propagation.

Aussi, pour entraver la propagation des courants de fuite, est-il connu d'augmenter la longueur de l'insert isolant, de manière à augmenter la ligne de fuite, c'est-à-dire la distance que doivent parcourir les courants de fuite pour rallier la ou les parties conductrices jouxtant l'insert.

Il est également connu de recouvrir la surface de l'insert d'un mince film de silicone, de manière à empêcher la rétention des gouttelettes d'eau et éviter ainsi la formation sur l'insert d'un film aqueux.

On connaît également du document EP-0 940 366 un engin élévateur dont le bras sommital est muni d'un disque radial, dénommé parapluie, revêtu d'un vernis siliconé, et destiné à accroître la résistance au mouillage dudit bras en vue de limiter la propagation des courants de fuite.

Cette technologie peut donner entière satisfaction lorsque les conditions météorologiques et de terrain sont satisfaisantes.

En revanche, par forte pluie, il risque de se former sur la surface supérieure du parapluie une flaque d'eau qui, en dégoulinant sur la portion inférieure du bras, favorise plutôt qu'elle ne l'entrave la propagation des courants de fuite. Dans ces conditions, le risque de court-circuit se trouve lui-même considérablement accru.

De plus, du fait de son encombrement, le parapluie risque de buter contre d'éventuels obstacles (le plus souvent des branchages), voire de s'y accrocher.

Il en résulte un risque élevé d'endommagement du vernis siliconé du parapluie, au détriment de son efficacité. Il se peut même que le parapluie soit tout bonnement arraché, ce qui entraîne l'immobilisation immédiate de l'engin pour effectuer les réparations qui s'imposent.

L'invention vise notamment à remédier aux inconvénients précités, en proposant un dispositif d'isolation électrique qui, tout en limitant davantage la propagation des courants de fuite, et ce même en cas de fortes intempéries, soit suffisamment robuste pour permettre les interventions dans toutes les conditions de terrain.

A cet effet, l'invention propose un dispositif d'isolation électrique pour un appareil de manutention muni d'un bras, ce dispositif comportant un insert électriquement isolant destiné à former une portion dudit bras, cet insert comportant un noyau rigide tubulaire qui, réalisé dans un matériau électriquement isolant, est recouvert d'une enveloppe en élastomère radialement nervurée sur la majeure partie de sa longueur.

Il en résulte une augmentation considérable de la ligne de fuite de l'insert, tandis que la compacité de celui-ci est préservée.

De plus, en cas de fortes précipitations, l'enveloppe nervurée assure un drainage efficace de l'eau, entravant ainsi la formation à la surface de l'insert d'un film aqueux conducteur.

En outre, l'enveloppe étant relativement résistante aux chocs et aux frottements contre d'éventuels obstacles qui pourraient se trouver au voisinage de la zone d'intervention, elle confère à l'insert une résistance accrue.

L'invention vise également un engin élévateur comportant un tel dispositif d'isolation.

l'enveloppe est par exemple nervurée de telle manière que le rapport entre la ligne de fuite de l'insert (c'est-à-dire la longueur de l'insert mesurée le long de sa surface extérieure) et sa longueur hors tout soit supérieur ou égal à 2.

Ainsi la résistance à la propagation des courants de fuite est-elle au moins double de celle d'un insert tubulaire classique de même longueur hors tout.

l'enveloppe peut notamment être nervurée de telle manière que ce rapport soit compris entre 2 et 3.

Suivant un mode de réalisation, l'enveloppe présente une nervure continue hélicoïdale, qui est par exemple inclinée par rapport à un plan perpendiculaire à l'axe de l'insert.

Le noyau de l'insert est de préférence réalisé dans un matériau composite, tel qu'une fibre de verre.

En outre, suivant un mode de réalisation, le dispositif d'isolation électrique comporte au moins un embout de fixation rigidement fixé à l'une des extrémités de l'insert, et destiné à être fixé sur une portion tubulaire adjacente du bras de l'appareil de manutention.

Suivant un mode préféré de réalisation où l'insert est destiné à être intercalé entre deux portions coaxiales du bras de l'appareil de manutention, le dispositif d'isolation comporte deux embouts de fixation rigidement fixés à chacune des extrémités de l'insert et destinés à être respectivement fixés sur chacune desdites portions coaxiales.

Le noyau de l'insert d'une part, et les embouts de fixation d'autre part, délimitent par exemple une cavité étanche, à travers laquelle peuvent transiter des câbles de commande de l'engin.

Suivant un mode de réalisation, le (ou chaque) embout est fixé à l'extrémité de l'insert par frettage et collage, cette fixation étant complétée par un vissage ou un goupillage.

Par ailleurs, le dispositif d'isolation électrique peut comporter un système de déshumidification de la cavité étanche délimitée par l'insert.

Ce système de déshumidification comporte par exemple une alimentation en gaz raccordée à la cavité, et agencée pour maintenir dans celle-ci une pression de gaz supérieure à la pression atmosphérique.

On évite ainsi l'accumulation dans la cavité d'humidité et de poussières, qui sont, en soi, favorables à la propagation de courants de fuite.

Le gaz employé est de préférence un gaz inerte, par exemple de l'azote. Un produit dessicant est de préférence placé dans la cavité intérieure.

D'autres objets et avantages de l'invention apparaîtront à la lumière de la description qui va suivre, faite en référence aux dessins annexés dans lesquels :
- la figure 1 est une vue d'élévation de côté d'un engin élévateur muni d'un mécanisme télescopique équipé d'un dispositif d'isolation électrique ;
- la figure 2 est une vue en coupe d'un détail de l'engin élévateur de la figure 1, illustrant le dispositif d'isolation électrique ;
- la figure 3 est une vue en coupe de détail du dispositif d'isolation électrique de la figure 2 ; et
- la figure 4 est une vue analogue à la figure 3, suivant une variante de réalisation.

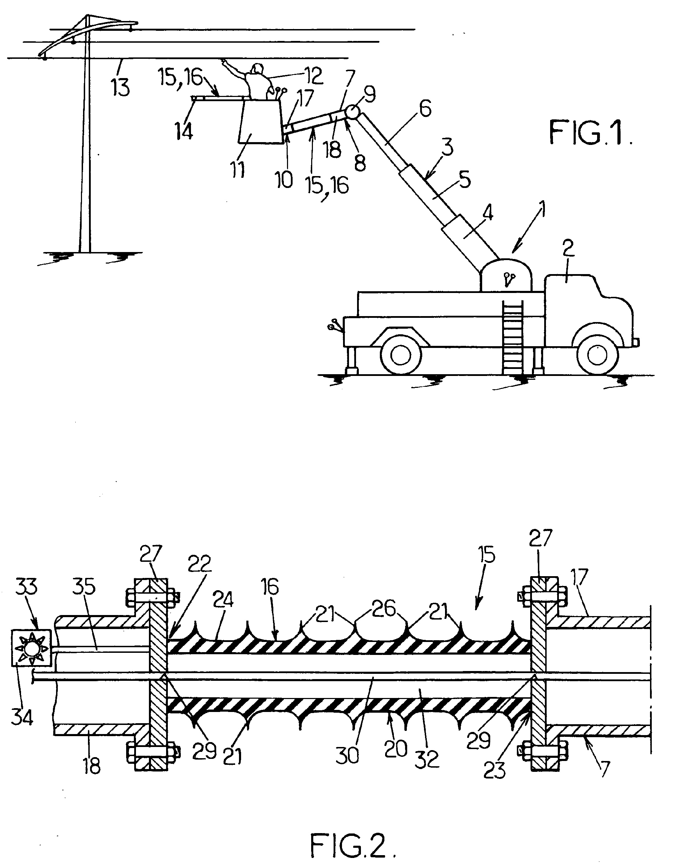

Sur la figure 1 est représenté un appareil de manutention 1. Il s'agit en l'occurrence d'un engin de levage utilisé pour la maintenance des lignes électriques, en particulier des lignes électriques à haute tension. Cet engin compote un véhicule automobile 2 équipé d'un mécanisme élévateur télescopique 3 comportant une pluralité de bras coulissants 4, 5, 6 emboîtés les uns dans les autres.

L'engin 1 comporte également, conformément au mode de réalisation illustré sur la figure 1, un bras sommital 7 pivotant qui se raccorde, par l'une de ses extrémités, dite inférieure 8, au dernier 6 des bras du mécanisme élévateur 3 par une articulation 9 et qui supporte à son extrémité opposée, dite supérieure 10, une nacelle 11 destinée à accueillir un opérateur 12 chargé d'une intervention sur une ligne électrique 13.

Comme cela est visible sur la figure 1, la nacelle 11 est équipée d'un mât 14, permettant notamment à la nacelle 11 de prendre appui sur la ligne 13 ou de maintenir celle-ci à une distance fixe de la nacelle 11 afin de faciliter les interventions de l'opérateur sur la ligne 13.

Lors d'une intervention manuelle sans gants isolants, l'opérateur 12 - et donc la nacelle 11 - se trouve au même potentiel que la ligne électrique 13, tandis que le véhicule 2 se trouve au potentiel terre.

C'est pourquoi, afin de protéger l'opérateur de tout choc électrique, l'engin 1 est équipé d'un dispositif 15 prévu pour isoler électriquement la nacelle 11 du reste de l'engin 1. Comme nous le verrons par la suite, ce dispositif 15 est agencé pour éviter la propagation des courants de fuite issus de la ligne électrique 13, en particulier par temps humide.

Comme cela est visible sur la figure 1, ce dispositif d'isolation électrique 15 comporte un insert électriquement isolant 16 formant une portion du bras sommital 7. Cet insert 16 est intercalé entre deux portions coaxiales du bras sommital, à savoir une portion supérieure 17, située du côté de la nacelle 11, et une portion inférieure 18 située du côté de l'articulation 9.

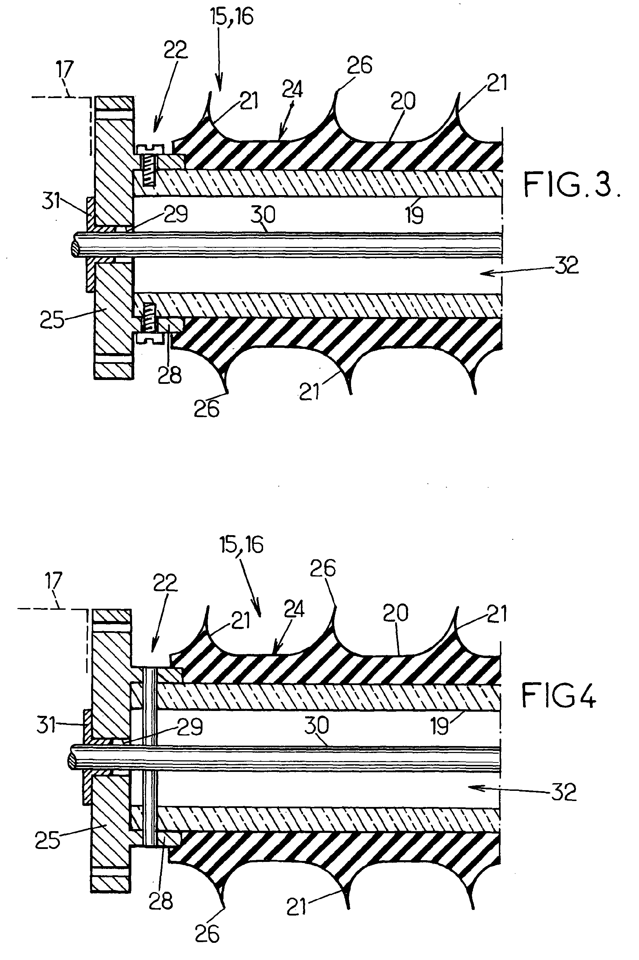

Comme cela est visible sur les figures 2 et 4, l'insert 16 est globalement cylindrique. Il comporte un noyau 19 rigide tubulaire, réalisé dans un matériau électriquement isolant, recouvert d'une enveloppe 20 en élastomère, de préférence en silicone, qui est radialement rainurée sur la majeure partie de sa longueur.

L'enveloppe présente par exemple une série de nervures espacées. Toutefois, dans l'exemple représenté, l'enveloppe 20 présente une rainure 21 hélicoïdale qui s'étend sur toute la longueur de l'insert 16.

Le noyau 19 forme le corps de l'insert 16 ; il est destiné à supporter la charge comprenant les nacelles 11 et les opérateurs 12 qui s'y trouvent. Le noyau 19 est, de préférence, réalisé dans un matériau composite, tel qu'une fibre de verre, qui confère à l'insert 16 d'excellentes propriétés mécaniques de résistance à la flexion et à la torsion, ainsi qu'une grande résistivité électrique.

Quant à l'enveloppe 20, elle peut être posée sur le noyau 19 par la technique employée d'ordinaire pour le gainage des câbles, à savoir l'enrobage par extrusion, technique que l'on adaptera toutefois pour la formation de la nervure radiale 21.

On peut par exemple munir l'extrémité de l'extrudeuse d'un disque rotatif muni d'une encoche et dont la rotation est commandée en fonction de la vitesse d'avance de l'élastomère dans le tube de l'extrudeuse, et du pas choisi pour la nervure hélicoïdale 21.

On peut ainsi obtenir une nervure hélicoïdale 21 à pas constant (comme cela est représenté sur les figures 2 à 4 ou, en fonction des réglages de l'extrudeuse, à pas variable.

Suivant un mode de réalisation illustré sur les figures 3 et 4, la nervure 21 présente en section un profil asymétrique : elle est inclinée par rapport à un plan perpendiculaire à l'axe A de l'insert 16, depuis la portion supérieure 17 vers la portion inférieure 18. Il en résulte un meilleur ruissellement de l'eau de pluie en cas d'intempéries.

On note l la longueur hors tout de l'insert 16, c'est-à-dire la distance la plus courte, mesurée parallèlement à l'axe A de l'insert, séparant les extrémités 22, 23 de celui-ci.

Et l'on note L la ligne de fuite de l'insert 16, c'est-à-dire la distance séparant les extrémités 22, 23 de l'insert 16, mesurée axialement suivant le contour de la surface extérieure 24 de l'enveloppe 20.

On comprend aisément que, comte tenu de la présence de la nervure radiale 21, la ligne de fuite L est supérieure à la longueur hors tout l de l'insert 16.

Comme l'insert 16 isole électriquement les portions supérieure 17 et inférieure 18 du bras sommital 7, les courants de fuite qui s'échappent de la ligne électrique 13 sont contraints, pour rallier la portion inférieure 18, d'emprunter la surface extérieure 24 de l'enveloppe 20 en parcourant la ligne de fuite L.

Ainsi, par rapport à un insert tubulaire classique de même longueur hors tout, l'insert 16 présente une résistance accrue à la propagation des courants de fuite, dans un rapport R=L/l que l'on peut faire varier en fonction de la forme de la nervure 21, et en particulier de son diamètre extérieur.

Il est ainsi possible de configurer la nervure 21 pour que le rapport R caractéristique de l'insert 16 soit supérieur ou égal à 2, par exemple compris entre 2 et 3.

Ainsi, pour un rapport R égal à 3, l'insert 16 présente, par rapport à un insert tubulaire classique de même résistance à la propagation des courants de fuite, une longueur hors tout trois fois moindre.

Autrement dit, un insert 16 d'une longueur hors tout d'l m présente la même résistance à la propagation des courantes de fuite qu'un insert tubulaire classique d'une longueur hors tout de 3 m.

En outre, l'utilisation du silicone, matériau hydrophobe, pour la réalisation de l'enveloppe 20, favorise la dispersion de l'eau en fines gouttelettes, évitant ainsi la formation d'un film aqueux conducteur.

Il en résulte une légèreté et une compacité accrues de l'insert 16 par rapport aux inserts connus.

Cette compacité de l'insert 16 lui confère une meilleure tenue mécanique à la fois en flexion et en torsion, au bénéfice de la rigidité du bras qui en est équipé.

Grâce à la faible longueur de l'insert 16, il est possible d'en équiper un engin élévateur 1 de type télescopique, comme cela est représenté sur la figure 1, sans que cet équipement ne nuise, au contraire de ce qui était connu, à la compacité de l'élévateur, d'où, à performances égales, une compacité accrue de l'élévateur par rapport aux élévateurs connus.

Grâce encore à la faible longueur de l'insert 16, il est possible d'en équiper un engin élévateur 1 de type télescopique, comme cela est représenté sur la figure 1, sans que cet équipement ne nuise, au contraire de ce qui était connu, à la compacité de l'élévateur, d'où, à performances égales, une compacité accrue de l'élévateur par rapport aux élévateurs connus.

La forme particulière de la nervure 21, telle que représentée sur les figures 2 et 3, favorise en outre le drainage de l'eau de pluie par ruissellement lors des interventions par mauvais temps.

En particulier, du fait de son profil pointu vu en coupe (en forme de V), la nervure 21 présentent une arête périphérique 26 ui favorise l'égouttement de l'eau et l'assèchement de la surface 24 de l'enveloppe 20. On évite ainsi que se forme à la surface 24 de l'enveloppe 20 un film continu favorable à la propagation des courants de fuite.

Il est à noter que, comme cela est visible sur la figure 3, l'enveloppe 20 ne se présente pas sous la forme d'un simple film recouvrant le noyau 19, mais sous la forme d'une couche épaisse (par rapport à l'épaisseur radiale du noyau 19), résistante aux chocs et aux frottements contre d'éventuels obstacles, tels que des branchages se trouvant au voisinage de la zone d'intervention.

Cette résistance est également favorisée par la souplesse et l'élasticité de la nervure 21.

Il en résulte une grande longévité de l'insert 16 qui conserve ainsi toutes ses propriétés sans qu'il soit nécessaire de procéder trop fréquemment à sa réparation ou à son remplacement.

Lorsqu'il devient malgré tout nécessaire de réparer l'enveloppe 20, il suffit toutefois de procéder à un surmoulage au moins local, ce qui n'immobilise que brièvement l'insert 16.

Par ailleurs, l'insert 16 est monté de manière à assurer non seulement la continuité mécanique du bras sommital 7, mais également la transmission de la commande des mouvements de la nacelle 11 et des organes dont elle est équipée.

A cet effet, et comme cela est visible sur la figure 2, le dispositif d'isolation 15 comporte deux embouts de fixation 27 fixés aux extrémités 22, 23 de l'insert 16.

Chaque embout 27 comporte par exemple un disque circulaire 25 dont saille une portion tubulaire 28 centrée sur l'axe A de l'insert 16, et frettée (emboîtée à force) sur l'extrémité du noyau 19 tout en étant collée à celui-ci.

De préférence, la portion tubulaire 28 est en outre fixée de manière complémentaire au noyau 19, par vissage radial (figure 3) ou au moyen d'une ou plusieurs goupilles radiales ou diamétrales (figure 4).

Comme cela est illustré sur la figure 2, les embouts 27 sont ensuite boulonnés aux portions 17, 18.

On obtient de la sorte une fixation parfaitement rigide de l'insert 16 aux portions 17, 18 du bras 7. En particulier, le vissage (ou le goupillage) radial des embouts 27 au noyau 19 permet d'éviter, dans l'hypothèse où le collage se révèlerait insuffisant, toute rotation de l'insert 16 par rapport aux portions 17, 18 du bras 7, ce qui garantit le maintien de l'orientation de la nacelle 11.

Les embouts 27 sont réalisés dans un matériau suffisamment rigide pour assurer la tenue de l'interface mécanique entre les portions d'extrémité 17, 18 du bras sommital 7 et l'insert 16. Ils sont par exemple réalisés en acier ou dans un alliage d'aluminium.

Dans le cas d'une transmission des commandes par liaison physique, les embouts 27 peuvent être percés d'un trou 29 pour permettre le passage étanche d'un câble de commande 30, notamment hydraulique ou optique.

Un couvercle 31 est emboîté dans le trou 29 pour assurer le passage étanche du câble de commande 30 au travers de l'embout 27.

Par ailleurs, afin d'éviter l'accumulation d'humidité ou de poussière à l'intérieur de la cavité cylindrique 32 ménagée dans l'insert 16 pour le passage des liaisons de commande, et délimitée par le noyau 19 d'une part et par les embouts de fixation 27 d'autre part, le dispositif d'isolation électrique 15 est équipé d'un système 33 de déshumidification de la cavité 32.

Ce système 33 comporte une alimentation 34 en gaz raccordée à la cavité 32 au moyen d'une conduite 35 traversant l'un des embouts de fixation 27.

L'alimentation 34 est agencée pour maintenir dans la cavité 32 une pression de gaz supérieure à la pression atmosphérique. Elle comporte par exemple un compresseur ou un régulateur de pression raccordé à un réservoir de gaz (non représenté).

La surpression régnant dans la cavité 32 permet de limiter la pénétration dans celle-ci de l'humidité et des poussières environnantes.

Un tampon de produit dessicant peut en outre être placé dans la cavité 32 afin de retenir la vapeur d'eau par interaction moléculaire.

Lorsque le produit dessicant (par exemple de l'alumine activée, du tamis moléculaire ou encore du silicagel) est saturé, il peut être remplacé.

Par ailleurs, le gaz pulsé est, de préférence, un gaz inerte (tel que de l'azote), choisi pour son absence de réactivité chimique avec les divers composants du dispositif d'isolation électrique 15, de sorte notamment à éviter la corrosion des embouts de fixation 27.

## Revendications

1. Dispositif d'isolation électrique (15) pour un engin de manutention (1) muni d'un bras (7), ce dispositif (15) comportant un insert (16) électriquement isolant destiné à former une portion dudit bras (7), cet insert (16) comportant un noyau (19) rigide tubulaire réalisé dans un matériau électriquement isolant, **caractérisé en ce que** ledit noyau (16) est recouvert d'une enveloppe (20) en élastomère qui est radialement nervurée sur la majeure partie de sa longueur.

2. Dispositif selon la revendication 1, dans lequel l'enveloppe (20) est nervurée de telle manière que le rapport (R) entre la ligne de fuite (L) de l'insert (16) et sa longueur hors tout (l) soit supérieur ou égal à 2.

3. Dispositif selon la revendication 2, dans lequel ledit rapport (R) est compris entre 2 et 3.

4. Dispositif selon l'une des revendications 1 à 3, dans lequel l'enveloppe (20) est en silicone.

5. Dispositif selon l'une des revendications 1 à 4, dans lequel l'enveloppe (20) présente une rainure continue hélicoïdale (21).

6. Dispositif selon la revendication 5, dans lequel la nervure (21) est inclinée par rapport à un plan perpendiculaire à l'axe (A) de l'insert (16).

7. Dispositif selon l'une des revendications 1 à 6, dans lequel le noyau (19) de l'insert (16) est réalisé dans un matériau composite.

8. Dispositif selon la revendication 7, dans lequel ledit noyau (19) est réalisé en fibre de verre.

9. Dispositif selon l'une des revendications 1 à 8, qui comporte au moins un embout de fixation (27) rigidement fixé à l'une des extrémités (22, 23) de l'insert (16), et destiné à être fixé à une portion tubulaire (17, 18) adjacente du bras (7) de l'appareil de manutention (1).

10. Dispositif selon la revendication 9, dans lequel, l'insert (16) étant destiné à être intercalé entre deux portions (17, 18) coaxiales du bras (7) de l'engin de manutention (1), le dispositif d'isolation (15) comporte deux embouts de fixation (27) rigidement fixés à chacune des extrémités (22, 23) de l'insert (16) et destinés à être respectivement fixés à chacune desdites portions coaxiales (17, 18).

11. Dispositif selon la revendication 10, dans lequel le noyau (19) de l'insert (16) d'une part, et les embouts de fixation (27) d'autre part, délimitent une cavité (32) étanche.

12. Dispositif selon l'une des revendications 9 à 11, dans lequel le ou chaque embout (27) est collé à l'extrémité (22, 23) correspondante de l'insert (16).

13. Dispositif selon l'une des revendications 10 à 12, dans lequel l'embout est associé à l'insert (16) au moyen d'une goupille ou de vis.

14. Dispositif selon l'une des revendications 1 à 13, dans lequel, ledit insert (16) délimitant une cavité intérieure (32) étanche, ledit dispositif (15) comporte un système (33) de déshumidification de ladite cavité (32).

15. Dispositif selon la revendication 14, dans lequel ledit système de déshumidification (33) comporte une alimentation en gaz (34) raccordée à ladite cavité (32), et agencée pour maintenir dans celle-ci une pression de gaz supérieure à la pression atmosphérique.

16. Dispositif selon la revendication 15, **caractérisé en ce que** ledit gaz est un gaz inerte, tel que de l'azote.

17. Dispositif selon l'une des revendications 14 à 16, dans lequel ledit système de déshumidification (33) comporte un produit dessicant placé dans ladite cavité intérieure (32).

18. Engin élévateur (1) comportant un dispositif d'isolation électrique (15) selon l'une des revendications 1 à 17.
